# EUROPÄISCHE PATENTSCHRIFT

(11) **EP 2 929 304 B1**
(45) Veröffentlichungstag und Bekanntmachung des Hinweises auf die Patenterteilung: **07.04.2021**
(21) Anmeldenummer: 13799070.1
(22) Anmeldetag: 03.12.2013
(51) Int. Cl.: G01H 1/00, G10K 11/00

(54) **MESSEINRICHTUNG UND BAUTEIL MIT DARIN INTEGRIERTER MESSEINRICHTUNG**
MEASURING DEVICE AND COMPONENT WITH MEASURING DEVICE INTEGRATED THEREIN
DISPOSITIF DE MESURE ET PIÈCE DANS LAQUELLE EST INTÉGRÉ LEDIT DISPOSITIF DE MESURE

(30) Priorität: 04.12.2012 DE 102012222239
(43) Veröffentlichungstag der Anmeldung: 14.10.2015
(73) Patentinhaber: iNDTact GmbH, 97076 Würzburg (DE)
(72) Erfinder: PETRICEVIC, Raino, 97074 Würzburg (DE)
(74) Vertreter: Dr. Gassner & Partner mbB
(86) Internationale Anmeldenummer: PCT/EP2013/075413
(87) Internationale Veröffentlichungsnummer: WO 2014/086793

(56) Entgegenhaltungen:
- DE-A1- 10 341 900
- DE-A1-102009 022 187
- US-A- 4 556 814
- US-A- 5 025 666
- US-A- 5 987 992
- US-A1- 2011 290 584

## Beschreibung

Die Erfindung betrifft eine Messeinrichtung. Sie betrifft ferner ein Bauteil mit einer darin integrierten Messeinrichtung. Eine solche Messeinrichtung ist aus der US 2003/0030565 A1 bekannt. Bei der bekannten Messeinrichtung sind auf einer Platine ein elektromechanischer Wandler zur Erfassung von Schwingungen eines Lagers sowie eine elektronische Baueinheit zur Aufnahme und Verarbeitung der vom Wandler gelieferten Signale montiert. Die Platine ist von einem Gehäuse umgeben. Ein Zwischenraum zwischen der Platine mit dem darauf aufgenommenen Wandler sowie der darauf aufgenommenen Baueinheit ist mit einer gummiartigen Masse, beispielsweise Silikon, verfüllt.

Ein weiteres Bauteil mit einer Messeinrichtung ist beispielsweise aus der US 6,252,334 B1 bekannt. Dabei ist eine Steuerelektronik mittels einer mit Durchkontaktierungen versehenen Interface-Platte mit einem in das Bauteil integrierten piezoelektrischen Wandler verbunden. Die Steuerelektronik ist dabei an einer Außenseite des Bauteils angebracht. Infolgedessen ist der Einsatzbereich der bekannten Messeinrichtung begrenzt. Sie eignet sich beispielsweise nicht zur Überwachung von Bauteilen, deren Oberfläche Hitze, Kälte, strömende Medien und dgl. ausgesetzt sind. Beispielsweise eignet sich die bekannte Messeinrichtung nicht zum Messen von Spannungen in Rotorblättern eines Helikopters, Rotorblättern für Windkraftanlagen, Felgen und Laufrädern von Fahrzeugen und dgl.

Die EP 2 372 802 A2 offenbart einen elektromechanischen Wandler, bei dem ein piezoelektrischer Wandler und damit verbundene Leiterbahnen in einen aus einem stabilisierten Polymerprepreg gebildeten Gesamtverbund integriert sind.

Die DE 10 2006 035 274 A1 beschreibt ein Faserverbundbauteil, bei dem eine Sensoreinheit, eine Energieversorgung und Leuchtdioden in das

Faserverbundbauteil integriert sind. Die Sensoreinheit ist außerhalb der neutralen Faser des Faserverbundbauteils angebracht. Zum Schutz der Einwirkung mechanischer Spannungen sind die Energieversorgung und die Signalverarbeitung im Bereich der neutralen Faser des Faserverbundbauteils angeordnet.

Die DE 10 2005 006 666 A1 offenbart einen piezoelektrischen Sensor, der aus einem piezoelektrischen Messwertaufnehmer, einer Verstärkerschaltung sowie mindestens einem Anschluss für externe Strom- oder Signalleitungen besteht. Die vorgenannten Elemente sind auf oder in einer Trägerstruktur integriert.

Bei den bekannten Messeinrichtungen ist die über Signalleitungen realisierte Verbindung zwischen dem Wandler und der Steuerelektronik störungsanfällig. Eine Integration der Steuerelektronik in eine neutrale Faser eines Bauteils ist nur bei bestimmten Bauteilen möglich.

Die US 4,408,479 A offenbart eine Messeinrichtung nach dem Oberbegriff des Patentanspruchs 1.

Aufgabe der Erfindung ist es, die Nachteile nach dem Stand der Technik zu beseitigen. Es sollen insbesondere eine universelle und störungsunanfällige Messeinrichtung zur Integration in ein Bauteil und ein Bauteil angegeben werden.

Diese Aufgabe wird durch die Merkmale der Ansprüche 1 und 15 gelöst. Zweckmäßige Ausgestaltungen der Erfindung ergeben sich aus den Merkmalen der Ansprüche 2 bis 14 sowie 16 und 17.

Nach der Erfindung ist der Wandler unmittelbar kraft- und stoffschlüssig mit dem Gehäuse verbunden. Unter einer "kraft- und stoffschlüssigen Verbindung" wird im Sinne der vorliegenden Erfindung verstanden, dass insbesondere Schwingungen zwischen den kraft- und stoffschlüssig miteinander verbundenen Elementen im Wesentlichen ohne Energieverlust und/oder Phasenverschiebung übertragen werden. Kraft- und stoffschlüssig miteinander verbundene Elemente im Sinne der vorliegenden Erfindung verhalten sich hinsichtlich der Fortpflanzung von Schwingungen annähernd wie ein aus einem Stück hergestelltes Element. Zwischen den kraft- und stoffschlüssig verbundenen Elementen kommt es bei Einwirkung von Schwingungen nicht zu einer Relativbewegung.

Nach der Erfindung ist der Wandler unmittelbar kraft- und stoffschlüssig mit dem Gehäuse verbunden. Bei einer Integration des Gehäuses in das Bauteil wird damit erreicht, dass Schwingungen vom Bauteil über das Gehäuse unmittelbar auf den damit kraft- und stoffschlüssig verbundenen Wandler übertragen werden. Das Gehäuse ist dabei vorteilhafterweise ebenfalls kraft- und stoffschlüssig in das Bauteil integriert.

Nach einer nicht beanspruchten Variante ist der Wandler kraft- und stoffschlüssig über das Bauteil mit dem Gehäuse verbindbar. D. h. in diesem Fall wird die kraft- und stoffschlüssige Verbindung zwischen Wandler und Gehäuse erst bei der Integration in das Bauteil erreicht. Sowohl die Verbindung zwischen dem Bauteil und dem Wandler als auch die Verbindung zwischen dem Bauteil und dem Gehäuse ist in diesem Fall kraft- und stoffschlüssig. Auch damit wird erreicht, dass das Gehäuse und der Wandler sich gegenüber der Fortpflanzung von Schwingungen etwa wie ein einstückig geformtes Bauteil verhalten.

Indem der Wandler kraft- und stoffschlüssig unmittelbar mit dem Bauteil oder mittelbar über das Gehäuse mit dem Bauteil verbunden ist, wird eine optimale Übertragung von Schwingungen des Bauteils auf den Wandler erreicht. Energieverluste bei der Übertragung der Schwingungen oder eine Phasenverschiebung werden vermieden. Die vorgeschlagene Messeinrichtung zeichnet sich gegenüber dem Stand der Technik durch eine erheblich verbesserte Empfindlichkeit aus. Es können damit beispielsweise äußerst schwache seismische Schwingungen erfasst werden.

Nach einem weiteren Merkmal der Erfindung ist die elektronische Baueinheit zumindest teilweise von dem Gehäuse umgeben, wobei zwischen der elektronischen Baueinheit und dem Gehäuse eine Kompensationszone zur Aufnahme von Relativbewegungen zwischen dem Gehäuse und der elektronischen Baueinheit vorgesehen ist. Zwischen der elektronischen Baueinheit und dem das Gehäuse bildenden Material besteht kein unmittelbarer Kraftschluss. Infolgedessen ergeben sich bei der Einwirkung von mechanischen Spannungen auf das Gehäuse Relativbewegungen zwischen der elektronischen Baueinheit und dem Gehäuse. Die Kompensationszone ist so ausgebildet, dass ein das Gehäuse bildendes Material sich relativ zur elektronischen Baueinheit nur so bewegt, dass es zu keiner unmittelbaren Berührung und damit zur Übertragung von mechanischen Spannungen auf die elektronische Baueinheit kommt. Es wird verhindert, dass die elektronische Baueinheit durch vom Bauteil auf das Gehäuse übertragene mechanische Spannungen beschädigt wird. - Die erfindungsgemäß vorgeschlagene Messeinrichtung kann in ein Bauteil integriert werden. Dabei ist es insbesondere nicht erforderlich, die elektronische Baueinheit im Bereich einer neutralen Faser des Bauteils anzuordnen. Das schafft neue Freiheiten in der Konstruktion und Gestaltung von Bauteilen.

Nach einer vorteilhaften Ausgestaltung ist die Kompensationszone durch eine aus einem ersten elastischen Material hergestellte Schicht gebildet. Das erste elastische Material ist vorteilhafterweise ein Material mit einem Elastizitätsmodul im Bereich von 0,001 bis 10 GPa und/oder nicht-linearem elastischem Verhalten. Vorteilhafterweise weist das erste Material einen Elastizitätsmodul im Bereich von 0,1 bis 10 GPa auf.

Nach einer weiteren vorteilhaften Ausgestaltung ist die Schicht durch Umgießen der Baueinheit hergestellt. Das Umgießen der elektronischen Baueinheit kann beispielsweise mittels Spritzguss, Druckguss, Injection Molding, Resin Transfer Molding, Prepreg-Verfahren, Heißpressen, Vakuumsackverfahren im Autoklaven oder dgl. durchgeführt werden. Ferner ist es auch möglich, ein aus dem ersten elastischen Material hergestelltes Formteil auf die elektronische Baueinheit aufzustecken bzw. die elektronischen Baueinheiten mit dem Formteil zu versehen. Bei dem Formteil kann es sich um einen Ring, eine Kappe, eine Platte oder dgl. handeln.

Zweckmäßigerweise ist das erste elastische Material aus einem der folgenden Materialien hergestellt: PP, TPU, PA, PPS, Epoxid, LCP, TPI, PAI, PPS, PPSU, PEK, PEEK, Phenol, PE, Silicon, Kautschuk, Polymerschaum. Das erste elastische Material kann auch mit Fasern verstärkt sein. Die Fasern können beispielsweise aus E-Glas, Polymer, Aramid, Kohlenstoff, Metall oder Keramik hergestellt sein. Es kann sich auch um Naturfasern handeln. Es ist denkbar, Mischfasern in Form von Geweben, multidirektionalen Fasergelegen, Rovinggeweben, unidirektionale Gelegen, Crossplys (0°/90°), Crossplys (0°/45°), Vliesen, Endlosfasern oder vereinzelten Lang- oder Kurzfasern zu verwenden.

Nach einer alternativen Ausgestaltung kann die Kompensationszone, zumindest abschnittsweise, auch ein die elektronische Baueinheit umgebender Spalt sein. Auch das Vorsehen eines Spalts ermöglicht eine mechanische Entkopplung der elektronischen Baueinheit mit dem das Bauteil bildenden Material. Es ist auch möglich, dass die mit der Schicht umgossene elektronische Baueinheit zumindest teilweise von einem Spalt umgeben ist.

Vorteilhafterweise ist das Gehäuse aus einem zweiten elastischen Material hergestellt. Bei dem zweiten elastischen Material kann es sich um ein Material mit weitgehend linearen elastischen Verhalten handeln. Das zweite elastische Material ist zweckmäßigerweise aus einem der folgenden Materialien gebildet: Epoxid, PA, Phenol, PE, PU, PP, TPU, LCP, TPI, PAI, PA, PPS, PPSU, PI, PEK, PEEK. Das zweite elastische Material kann insbesondere mit Fasern verstärkt sein. Die Fasern können beispielsweise aus E-Glas, Polymer, Aramid, Kohlenstoff, Metall oder Keramik hergestellt sein. Es kann sich auch um Naturfasern handeln. Es ist denkbar, Mischfasern in Form von Geweben, multidirektionalen Fasergelegen, Rovinggeweben, unidirektionalen Gelegen, Crossply (0°/90°), Crossply (0°/45°), Vlies, Endlosfasern oder vereinzelten Lang- oder Kurzfasern zu verwenden.

Zweckmäßigerweise ist das Gehäuse elektrisch leitfähig. Damit ist es möglich, elektrische Ladungen über das Gehäuse abzuleiten und/oder die elektronische Baueinheit vor Einwirkung elektromagnetischer Felder abzuschirmen. Die elektronische Baueinheit und/oder der Wandler und/oder die Signalleitungen können abgeschirmt sein. Die Abschirmung kann beispielsweise mittels einer Silberleitpaste oder mit einem Faserverbundwerkstoff aus Kohlenstoff (CFK) hergestellt werden.

Nach einer besonders vorteilhaften Ausgestaltung ist ein erster Elastizitätsmodul des ersten elastischen Materials kleiner als ein zweiter Elastizitätsmodul des zweiten elastischen Materials. Des Weiteren ist es vorteilhaft, wenn der zweite Elastizitätsmodul des zweiten elastischen Materials größer ist als ein dritter Elastizitätsmodul eines das Bauteil bildenden Materials. Damit kann eine Abnahme des Elastizitätsmoduls durch den Wandler, die Wandlerplatte bzw. die Kompensationszone ausgeglichen werden. Relativbewegungen und/oder mechanische Spannungen können besonders effektiv kompensiert werden, ohne das Bauteil zu schwächen.

Vorteilhafterweise ist das Bauteil aus einem Faserverbundwerkstoff hergestellt. Beispielsweise kann das Bauteil aus CFK, GFK oder aus Aramid-verstärktem Kunststoff (AFK) gebildet sein.

Der Wandler kann zumindest einen piezoelektrischen Wandler umfassen. Mit einem derartigen Wandler ist es möglich, beispielsweise dynamische, Dehnungen des Bauteils zu erfassen. Ferner ist eine Eigenschwingungsanalyse möglich. Daneben können akustische Emissionsmessungen und/oder Ultraschallmessverfahren durchgeführt werden. Die Verwendung eines piezoelektrischen Wandlers ermöglicht es außerdem, die Messeinrichtung mit elektrischer Energie zu versorgen. Von dem piezoelektrischen Wandler gelieferter elektrischer Strom kann beispielsweise in einer Energiespeichereinrichtung der Messeinrichtung gespeichert werden. Damit ist es möglich, die elektronische Baueinheit autark mit elektrischem Strom zu versorgen. Es ist überdies möglich, Messwerte per Funk an einen außerhalb des Bauteils angeordneten Empfänger zu übermitteln.

Nach der Erfindung umfasst der Wandler eine flexible Platte, in welche die Signalleitungen integriert sind. Die flexible Platte weist ein lineares elastisches Verhalten auf. Sie ist aus einem, vorzugsweise aus Epoxidharz hergestellten, faserverstärkten Polymer hergestellt. Die flexible Platte und/oder das Gehäuse können elektrisch leitfähige Bereiche enthalten. Solche Bereiche können sich auf der Oberfläche befinden und/oder das Material abschnittsweise senkrecht zur Oberfläche zur Herstellung von Durchkontakten durchdringen. Die elektrisch leitfähigen Bereiche können aus dem ersten oder zweiten elastischen Material und/oder oder aus Silberleitpaste hergestellt sein. Das Polymer kann aus einem Polymerprepreg gebildet sein und zweckmäßigerweise ein T_{G} ≥ 120°C, vorzugsweise T_{G} ≥ 140°C, aufweisen. Auch bei dem Polymerprepreg können die darin enthaltenen Fasern beispielsweise aus E-Glas, Polymer, Aramid, Kohlenstoff, Metall oder Keramik hergestellt sein. Es kann sich auch um Naturfasern handeln. Auch hier ist es denkbar, Mischfasern in Form von Geweben, multidirektionalen Fasergelegen, Rovinggeweben, unidirektionalen Gelegen, Crossply (0°/90°), Crossply (0°/45°), Vlies, Endlosfasern oder vereinzelten Lang- oder Kurzfasern zu verwenden.

Auch die flexible Platte kann zumindest teilweise von dem Gehäuse umgeben sein. Die flexible Platte erstreckt sich vom Gehäuse. Es kann sein, dass das Gehäuse auf die flexible Platte montiert ist. Das ermöglicht eine kraftschlüssige Einbindung der flexiblen Platte in das Bauteil.

Nach der Erfindung sind der Wandler und die flexible Platte in einer Baueinheit kraft- und stoffschlüssig integriert. Die Baueinheit bzw. der Wandler bildet zusammen mit der flexiblen Platte ein einstückiges Element, welches sich einfach und zuverlässig kraft- und stoffschlüssig in das Bauteil integrieren lässt.

Zumindest im Bereich der flexiblen Platte kann das Gehäuse zweckmäßigerweise ein T_{G} ≥ 120°C, vorzugsweise T_{G} ≥ 140°C, aufweisen. Besonders bevorzugt ist es, dass T_{G} des Gehäuses gleich T_{G} der flexiblen Platte ist.

Nach einer weiteren Ausgestaltung ist die elektronische Baueinheit, vorzugsweise unter Zwischenschaltung einer Durchkontakte aufweisenden Leiterplatte, auf die flexible Platte montiert und elektrisch mit den Signalleitungen verbunden. Die elektronische Baueinheit kann aber auch in einem Stecksockel aufgenommen sein, welcher mit den Signalleitungen in der flexiblen Platte elektrisch verbunden ist. Die elektronische Baueinheit kann eine oder mehrere der folgenden Komponenten umfassen: passive elektronische Bauelemente, Stecker/Buchsen, Operationsverstärker, Transponder, Datenspeicher, Energiespeicher, Frequenzfilter, A/D-Wandler, Funkmodul, Peak-Detektor, RFID-Modul, Antenne, Abschirmung, RAM, ROM, EPROM, EEPROM-Speicher, Temperatursensor, mikroelektromechanische Systeme (MEMS) und dgl.

Nach weiterer Maßgabe der Erfindung wird ein Bauteil mit einer darin zumindest teilweise integrierten erfindungsgemäßen Messeinrichtung vorgeschlagen, wobei das Bauteil aus einem Faserverbundwerkstoff hergestellt ist.

Nachfolgend werden vorteilhafte Ausgestaltungen der Erfindung anhand der Zeichnungen näher erläutert. Es zeigen:
Fig. 1 Eine schematische Schnittansicht eines ersten nicht beanspruchten Moduls,
Fig. 2 eine schematische Schnittansicht eines zweiten Moduls,
Fig. 3 eine schematische Schnittansicht eines dritten Moduls,
Fig. 4 eine schematische Schnittansicht eines vierten Moduls,
Fig. 5 die Anordnung eines Moduls in einem Bauelement und
Fig. 6 eine weitere Anordnung des Moduls gemäß Fig. 5 in einem Bauelement.

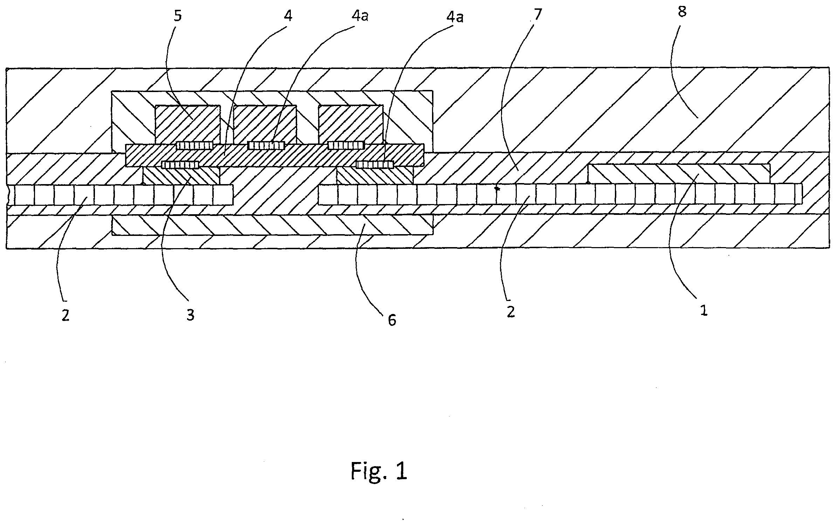

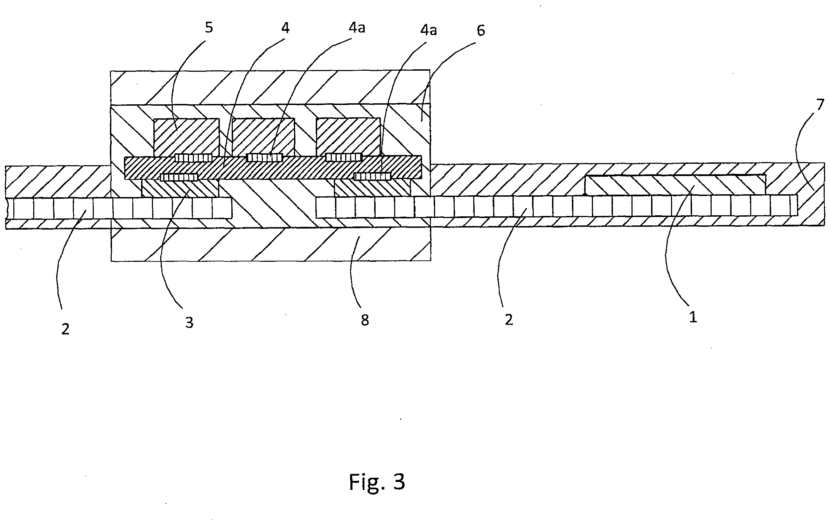

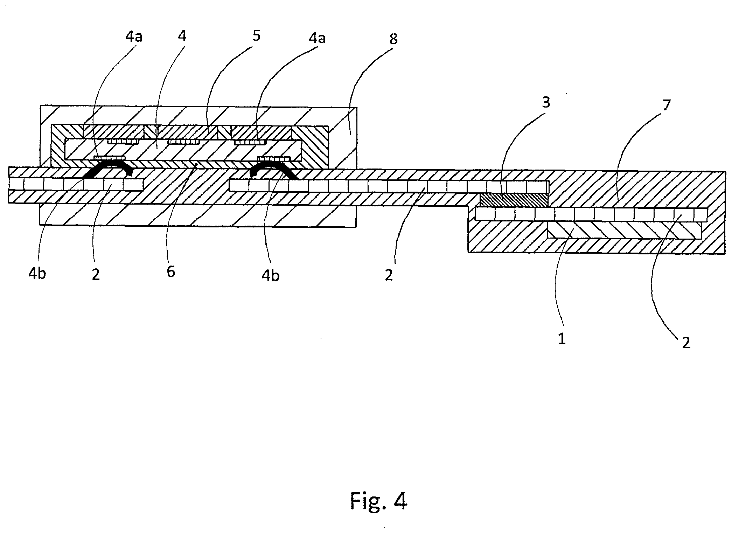

In den Fig. 1 bis 4 ist mit dem Bezugszeichen 1 jeweils ein elektromechanischer Wandler bezeichnet. Der Wandler 1 kann beispielsweise aus einer piezoelektrischen Keramik hergestellt sein oder eine solche Keramik umfassen. Eine solche piezoelektrische Keramik kann beispielsweise PTZ oder dgl., z. B. in Form von Fasern, Folien oder dgl., sein. Mit dem Bezugszeichen 2 sind Leiterbahnen bezeichnet, welche beispielsweise aus Kupfer, Aluminium oder elektrisch leitfähigen Polymeren, wie z. B. Silberleitlack, hergestellt sind. Die Leiterbahnen 2 sind mittels Kontaktierungen 3, bei denen es sich um eine Löt-, Klebe- oder Klemmkontaktierung 4b (siehe Fig. 4) handeln kann, mit einer Leiterplatte 4 verbunden. Die Leiterplatte 4 weist Durchkontakte 4a auf, mit denen ein elektrischer Kontakt zu mit dem Bezugszeichen 5 bezeichneten elektronischen Baueinheiten hergestellt wird. Bei den elektronischen Baueinheiten 5 kann es sich um passive elektronische Bauelemente, Stecker/Buchsen, Klemmkontakte, Lötkontakte, Kabel, Operationsverstärker, Transponder, Datenspeicher, Energiespeicher, Frequenzfilter, A/D-Wandler, Funkmodule, Peak-Detektoren, Temperaturfühler, mikroelektromechanische Systeme (MEMS) oder dgl. handeln.

Die elektronischen Baueinheiten 5 sind von einer mit dem Bezugszeichen 6 bezeichneten Kompensationszone umgeben. Die Kompensationszone 6 kann aus einem ersten elastischen Material hergestellt sein. Es kann sich dabei z. B. um Silikon, Polymerschaum, Epoxid, Polyurethan oder dgl. handeln. Das erste elastische Material kann auch mit Fasern verstärkt sein.

Insbesondere das elektromechanische Funktionselement 1 sowie die Leiterbahnen 2 sind in eine flexible Platte 7 integriert, welche aus einem Polymerprepreg hergestellt ist. Der Polymerprepreg ist mittels Fasern, insbesondere Glasfasern, verstärkt. Die flexible Platte 7 kann insbesondere eine strukturierte, raue Oberfläche zur kraft- und formschlüssigen Anbindung an ein das Bauteil bildendes Material bzw. das Gehäuse 8 aufweisen. Wie aus den Fig. 1, 2 und 4 ersichtlich ist, können auch die Kontaktierungen 3 in die flexible Platte 7 integriert sein. Ferner ist es möglich, dass auch die Leiterplatte 4, zumindest teilweise, in die flexible Platte 7 integriert ist.

Die beschriebene Anordnung aus flexibler Platte 7 und der hier in Form einer dämpfenden Verkapselung ausgebildeten Kompensationszone 6 ist von einem Gehäuse 8 umgeben. Das Gehäuse 8 ist hier in Form einer, aus einem zweiten elastischen Material gebildeten duktilen Verkapselung hergestellt. Das zweite elastische Material kann beispielsweise aus einem weiteren Polymerprepreg gebildet sein, welches mit Fasern verstärkt ist und eine strukturierte, raue Oberfläche zur kraft- und formschlüssigen Anbindung an ein Bauteil aufweist.

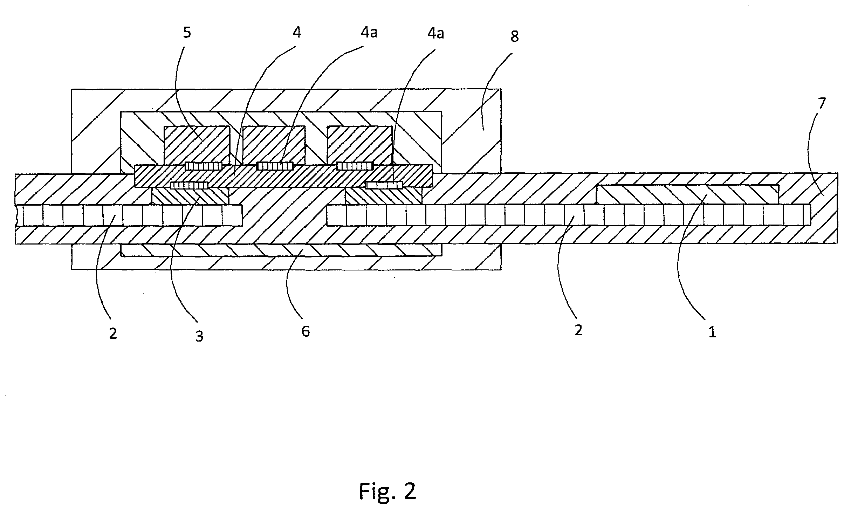

Wie insbesondere aus den Fig. 2 bis 4 ersichtlich ist, muss das Gehäuse 8 die flexible Platte 7 nicht oder nicht vollständig umgeben. Die Kontaktierungen 3 sowie die Leiterplatte 4 können sich auch in der Kompensationszone 6 befinden bzw. in ein die Kompensationszone 6 bildendes erstes elastisches Material integriert sein.

Das die Kompensationszone 6 bildende erste elastische Material weist einen ersten Elastizitätsmodul E1 auf, welcher kleiner als ein zweiter Elastizitätsmodul E2 des die Kompensationszone 6 umgebenden Gehäuses 8 ist. D. h. das erste elastische Material ist leichter elastisch verformbar als das zweite elastische Material. Auf das Gehäuse 8 einwirkende Spannungen werden zunächst durch eine Verformung des das Gehäuse 8 bildenden zweiten elastischen Materials und im Weiteren durch eine elastische Verformung des die Kompensationszone 6 bildenden ersten elastischen Materials weitgehend absorbiert. Infolgedessen wirken äußere Spannungen kaum auf die elektronischen Baueinheiten 5 sowie deren Verbindungen mit der Leiterplatte 4. Die vorgeschlagene Messeinrichtung ist äußerst robust und langlebig.

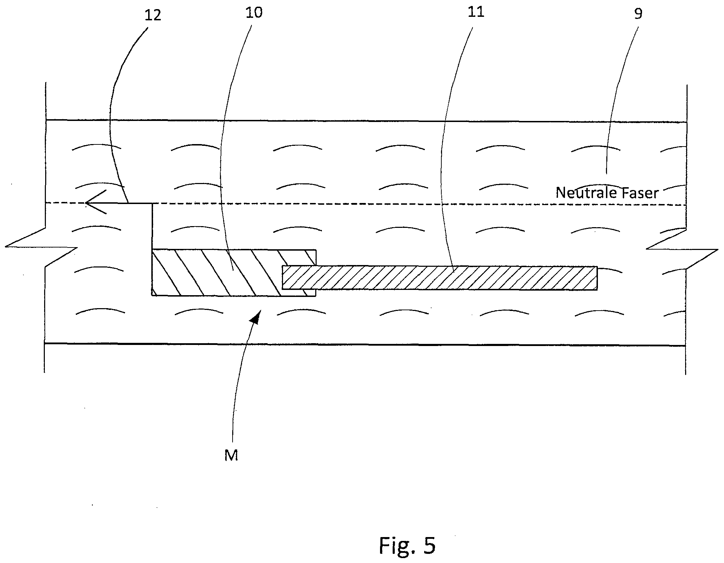

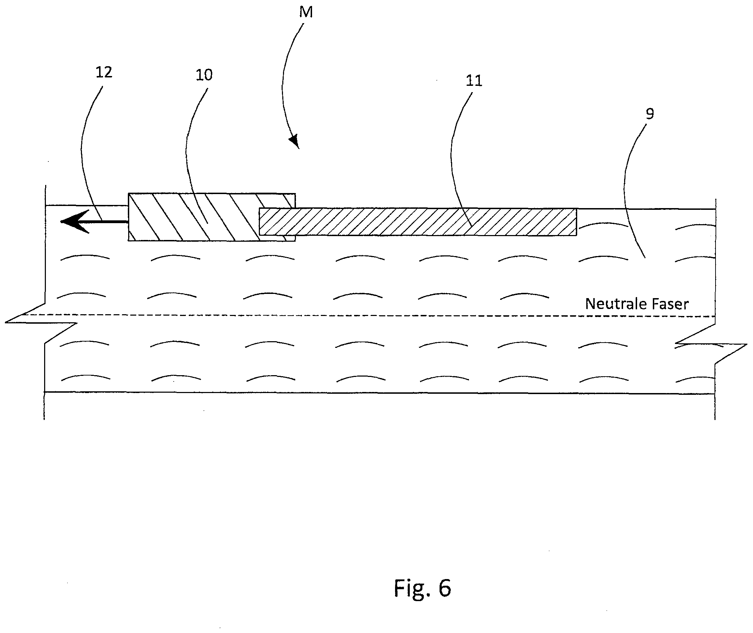

Die Fig. 5 und 6 zeigen Beispiele einer Integration einer Messeinrichtung in ein allgemein mit dem Bezugszeichen 9 bezeichnetes Bauteil. Das Bauteil 9 ist beispielsweise aus einem Faserverbundmaterial, wie CFK, GFK, AFK oder dgl., hergestellt. Die allgemein mit dem Bezugszeichen M bezeichnete Messeinrichtung umfasst einen ersten Abschnitt 10, in dem die von der Kompensationszone 6 umgebenen elektronischen Baueinheiten 5 angeordnet sind. Ein zweiter Abschnitt 11 der Messeinrichtung M umfasst den mit der flexiblen Platte 7 integrierten elektromechanischen Wandler 1 sowie zumindest abschnittsweise die Leiterbahnen 2. Die Abschnitte 10 und 11 können sowohl für sich genommen als auch gemeinsam zumindest teilweise vom Gehäuse 8 umgeben sein. Der Elastizitätsmodul des Gehäuses 8 ist dabei zweckmäßigerweise größer als der Elastizitätsmodul des das Bauteil 9 bildenden Materials.

Wie aus Fig. 5 ersichtlich ist, kann die Messeinrichtung M insgesamt außerhalb einer neutralen Fasern in das Bauteil 9 integriert sein. Es kann auch sein, dass die Messeinrichtung M außerhalb der neutralen Faser lediglich teilweise in das Bauteil 9 integriert ist (siehe Fig. 6). Die Messeinrichtung M kann auch nur auf das Bauteil 9 appliziert sein.

Die Messeinrichtung M kann energieautark ausgestaltet sein, d. h. die zum Betrieb der Messeinrichtung M erforderliche Energie kann mittels des elektromechanischen Wandlers 1 erzeugt und in einem Energiespeicher gespeichert werden. Die mit der Messeinrichtung M gemessenen Messwerte können per Funk an einen außerhalb des Bauteils 9 befindlichen Empfänger übermittelt werden.

Wie aus den Fig. 5 und 6 ersichtlich ist, ist es aber auch möglich, dass die im ersten Abschnitt 10 enthaltenen elektronischen Baueinheiten 5 über ein Kabel 12 mit einer weiteren Schnittstelle (hier nicht gezeigt), beispielsweise zur Energieversorgung und/oder Datenübertragung, verbunden sind. Das Kabel 12 kann sich zweckmäßigerweise in der neutralen Faser erstrecken.

Die erfindungsgemäß vorgeschlagene Messeinrichtung M kann zur permanenten Online-Zustandsüberwachung und/oder -Zustandsanzeige eines Bauteils verwendet werden. Sie kann insbesondere als permanent arbeitender oder energieautarker Überlastsensor verwendet werden.

Mit der vorgeschlagenen Messeinrichtung M ist es zweckmäßigerweise möglich, eine Zustandsüberwachung mit ortsempfindlicher Zustandsermittlung und Zustandsvisualisierung, durch Aufzeichnung von Lastkollektiven, von akustischen Emissionen, von Ultraschallsignalen sowie von Dehnungs- und Schwingungssignalen, jeweils für diskrete Schwellwerte und Frequenzbereiche sowie Übertragung dieser Lastkollektive an Empfangsgeräte mit Auswertungssoftware durchzuführen.

Ein mit der Messeinrichtung M versehenes Bauteil 9 kann als "fühlendes Bauteil", beispielsweise zur Belastungsdetektion, als akustischer Sensor, als Mikrophon, als Körnerschallsensor, zur Erkennung von Oberflächenstrukturen, zur Erkennung von Materialeigenschaften, zur Messung von Beschleunigungen, Drehmomentänderungen, Eigenfrequenzen, Geschwindigkeiten, insbesondere Windgeschwindigkeiten, Turbulenzen in Strömungen von Gasen oder Flüssigkeiten, sowie als Schall- und/oder Ultraschallquelle oder zur Erzeugung mechanischer Schwingungen, z. B. zur Erzeugung akustischer oder haptischer Informationssignale oder als Lautsprecher verwendet werden.

### Bezugszeichenliste

- 1: elektromechanischer Wandler
- 2: Leiterbahn
- 3: Kontaktierung
- 4: Leiterplatte
- 4a: Durchkontakt
- 4b: Klemmkontakt
- 5: elektronische Baueinheit
- 6: Kompensationszone
- 7: flexible Platte
- 8: Gehäuse
- 9: Bauteil
- 10: erster Abschnitt
- 11: zweiter Abschnitt
- 12: Kabel

- E1: erster Elastizitätsmodul
- E2: zweiter Elastizitätsmodul
- M: Messeinrichtung

## Patentansprüche

1. Messeinrichtung (M) zum Messen von in einem Bauteil (9) auftretenden mechanischen Spannungen oder Schwingungen, wobei die Messeinrichtung (M) ein Gehäuse (8), zumindest einen zur Integration in das Bauteil (9) geeigneten elektromechanischen Wandler (1), Signalleitungen, zumindest eine mit dem Wandler (1) über die Signalleitungen (2) verbundene elektronische Baueinheit (5) zur Aufnahme und Verarbeitung der vom Wandler (1) gelieferten Signale und eine zwischen der elektronischen Baueinheit (5) und dem Gehäuse (8) vorgesehene Kompensationszone (6) zur Aufnahme von Relativbewegungen zwischen dem Gehäuse (8) und der elektronischen Baueinheit (5) umfasst,
wobei die elektronische Baueinheit (5) zumindest teilweise vom Gehäuse (8) umgeben ist,
**dadurch gekennzeichnet, dass** die Messeinrichtung (M) eine flexible Platte (7) und eine zusätzliche Baueinheit umfasst, wobei
der Wandler (1) und die Signalleitungen (2) in die flexible Platte (7) integriert sind,
die flexible Platte (7) aus einem faserverstärkten Polymer hergestellt ist,
die flexible Platte (7) ein lineares elastisches Verhalten aufweist,
der Wandler (1) und die flexible Platte (7) in der zusätzlichen Baueinheit kraft- und stoffschlüssig integriert sind,
die flexible Platte (7) sich vom Gehäuse erstreckt, und
der Wandler (1) unmittelbar kraft- und stoffschlüssig mit dem Gehäuse (8) verbunden ist, so dass das Gehäuse (8) und der Wandler (1) sich gegenüber Schwingungen wie ein aus einem Stück hergestelltes Element verhalten.

2. Messeinrichtung (M) nach Anspruch 1, wobei die Kompensationszone (6) durch eine aus einem ersten elastischen Material hergestellte Schicht gebildet ist.

3. Messeinrichtung (M) nach Anspruch 2, wobei das erste elastische Material ein Material mit einem ersten Elastizitätsmodul (E1) im Bereich von 0,001 bis 10 GPa und/oder nicht-linearem elastischem Verhalten ist.

4. Messeinrichtung (M) nach Anspruch 2 oder 3, wobei die Schicht durch Umgießen der elektronischen Baueinheit (5) hergestellt ist.

5. Messeinrichtung (M) nach einem der Ansprüche 2 bis 4, wobei das erste elastische Material aus einem der folgenden Materialien hergestellt ist: PP, TPU, PA, PPS, Epoxid, LCP, TPI, PAI, PPS, PPSU, PEK, PEEK, Phenol, PE, Silikon, Kautschuk, Polymerschaum.

6. Messeinrichtung (M) nach einem der vorhergehenden Ansprüche, wobei die Kompensationszone (6) ein die elektronischen Baueinheit (5) umgebender Spalt ist.

7. Messeinrichtung (M) nach einem der vorhergehenden Ansprüche, wobei das Gehäuse (8) aus einem zweiten elastischen Material hergestellt ist.

8. Messeinrichtung (M) nach Anspruch 7, wobei das zweite elastische Material ein Material mit weitgehend linearem elastischen Verhalten ist.

9. Messeinrichtung (M) nach einem der Ansprüche 7 oder 8, wobei das zweite elastische Material der aus einem der folgenden Materialien gebildet ist: Epoxid, PA, Phenol, PE, PU, PP, TPU, LCP, TPI, PAI, PA, PPS, PPSU, PI, PEK, PEEK.

10. Messeinrichtung (M) nach einem der Ansprüche 2 bis 9, wobei der erste Elastizitätsmodul (E1) des ersten elastischen Materials kleiner ist als ein zweiter Elastizitätsmodul (E2) des zweiten elastischen Materials.

11. Messeinrichtung (M) nach einem der vorhergehenden Ansprüche, wobei der Wandler (1) zumindest einen piezoelektrischen Wandler umfasst.

12. Messeinrichtung (M) nach einem der Ansprüche 2 bis 11, wobei das erste Material und/oder das zweite Material aus einem, vorzugsweise faserverstärkten, Polymer hergestellt ist.

13. Messeinrichtung (M) nach einem der vorhergehenden Ansprüche, wobei die elektronische Baueinheit (5), vorzugsweise unter Zwischenschaltung einer Durchkontakte (4a) aufweisenden Leiterplatte (4), auf die flexible Platte (7) montiert und elektrisch mit den Signalleitungen (2) verbunden ist.

14. Messeinrichtung (M) nach einem der vorhergehenden Ansprüche, wobei die elektronische Baueinheit (5) eine oder mehrere der folgenden Komponenten umfasst: passive Bauelemente, Stecker/Buchsen, Klemmkontakte, Lötkontakte, Kabel, Operationsverstärker, Transponder, Datenspeicher, Energiespeicher, Frequenzfilter, Bandpass, A/D-Wandler, Funkmodul, Peak-Detektor, RFID-Modul, Antenne, Abschirmung, Temperatursensor, MEMS.

15. Bauteil (9) mit einer darin zumindest teilweise integrierten Messeinrichtung (M) nach einem der vorhergehenden Ansprüche, wobei das Bauteil (9) aus einem Faserverbundwerkstoff hergestellt ist.

16. Bauteil (9) nach Anspruch 15, wobei die Messeinrichtung (M) außerhalb einer neutralen Faser insgesamt oder lediglich teilweise in das Bauteil (9) integriert ist.

17. Bauteil nach Anspruch 15, wobei die Messeinrichtung (M) auf das Bauteil (9) appliziert ist.

## Claims

1. Measuring device (M) for measuring mechanical stresses or vibrations occurring in a component (9), the measuring device (M) comprising a housing (8), at least one electromechanical transducer (1) suitable for integration into the component (9), signal lines (2), at least one electronic unit (5) connected to the transducer (1) via the signal lines (2) for receiving and processing signals supplied by the transducer (1), and a compensation zone (6) provided between the electronic unit (5) and the housing (8) for receiving relative movements between the housing (8) and the electronic unit (5),
wherein the electronic unit (5) is at least partially surrounded by the housing (8),
**characterised in that** the measuring device (M) comprises a flexible plate (7) and an additional assembly unit, wherein
the transducer (1) and the signal lines (2) are integrated in the flexible plate (7), the flexible plate (7) is made of a fibre-reinforced polymer,
the flexible plate (7) has a linear elastic behaviour,
the transducer (1) and the flexible plate (7) are integrated in the additional assembly unit in a force-locking and material-locking manner,
the flexible plate (7) extends from the housing, and
the transducer (1) is directly connected to the housing (8) in a force-locking and material-locking manner, so that the housing (8) and the transducer (1) behave towards vibrations like an element made from one piece.

2. Measuring device (M) according to claim 1, wherein the compensation zone (6) is formed by a layer made of a first elastic material.

3. Measuring device (M) according to claim 2, wherein the first elastic material is a material having a first modulus of elasticity (E1) in the range of 0.001 to 10 GPa and/or a material showing a non-linear elastic behaviour.

4. Measuring device (M) according to claim 2 or 3, wherein the layer is produced by overmoulding the electronic unit (5).

5. Measuring device (M) according to any one of claims 2 to 4, wherein the first elastic material is made of one of the following materials: PP, TPU, PA, PPS, epoxy, LCP, TPI, PAI, PPS, PPSU, PEK, PEEK, phenol, PE, silicone, rubber, polymer foam.

6. Measuring device (M) according to one of the preceding claims, wherein the compensation zone (6) is a gap surrounding the electronic unit (5).

7. Measuring device (M) according to any one of the preceding claims, wherein the housing (8) is made of a second elastic material.

8. Measuring device (M) according to claim 7, wherein the second elastic material is a material with largely linear elastic behaviour.

9. Measuring device (M) according to any one of claims 7 or 8, wherein the second elastic material is formed of one of the following materials: epoxy, PA, phenol, PE, PU, PP, TPU, LCP, TPI, PAI, PA, PPS, PPSU, PI, PEK, PEEK.

10. Measuring device (M) according to any one of claims 2 to 9, wherein the first modulus of elasticity (E1) of the first elastic material is smaller than a second modulus of elasticity (E2) of the second elastic material.

11. Measuring device (M) according to any one of the preceding claims, wherein the transducer (1) comprises at least one piezoelectric transducer.

12. Measuring device (M) according to any one of claims 2 to 11, wherein the first material and/or the second material is made of a, preferably fibre-reinforced, polymer.

13. Measuring device (M) according to one of the preceding claims, wherein the electronic unit (5) is mounted on the flexible plate (7), preferably with the interposition of a printed circuit board (4) having through contacts (4a), and is electrically connected to the signal lines (2).

14. Measuring device (M) according to any one of the preceding claims, wherein the electronic unit (5) comprises one or more of the following components: passive components, plugs/sockets, terminal contacts, solder contacts, cables, operational amplifier, transponder, data memory, energy memory, frequency filter, bandpass filter, A/D converter, radio module, peak detector, RFID module, antenna, shielding, temperature sensor, MEMS.

15. Component (9) with a measuring device (M) at least partially integrated therein according to one of the preceding claims, wherein the component (9) is made of a fibre reinforced composite material.

16. Component (9) according to claim 15, wherein the measuring device (M) is completely or only partially integrated into the component (9) outside a neutral fibre.

17. Component according to claim 15, wherein the measuring device (M) is applied to the component (9).

## Revendications

1. Dispositif de mesure (M) permettant de mesurer des tensions ou des oscillations mécaniques se produisant dans un composant (9), en ce que le dispositif de mesure (M) comprend un boîtier (8), au moins un convertisseur (1) électromécanique conçu pour l'intégration dans le composant (9), des lignes de signaux, au moins un module électronique (5) relié au convertisseur (1) par le biais des lignes de signaux (2) pour la réception et le traitement des signaux fournis par le convertisseur (1) et une zone de compensation (6) ménagée entre le module électronique (5) et le boîtier (8) pour absorber des mouvements relatifs entre le boîtier (8) et le module électronique (5), en ce que le module électronique (5) est au moins partiellement entouré par le boîtier (8),
**caractérisé en ce que** le dispositif de mesure (M) comprend une plaque souple (7) et un module additionnel, **en ce que**
le convertisseur (1) et les lignes de signaux (2) sont intégrés dans la plaque souple (7),
la plaque souple (7) est réalisée en un polymère renforcé de fibres,
la plaque souple (7) présente une tenue élastique linéaire,
le convertisseur (1) et la plaque souple (7) sont intégrés par adhérence et par liaison de matière dans le module additionnel,
la plaque souple (7) s'étend à partir du boîtier, et
le convertisseur (1) est relié directement par adhérence et par liaison de matière au boîtier (8) de sorte que le boîtier (8) et le convertisseur (1) par rapport à des oscillations se comportent comme un élément réalisé en une pièce.

2. Dispositif de mesure (M) selon la revendication 1, en ce que la zone de compensation (6) est formée par une couche réalisée en un premier matériau élastique.

3. Dispositif de mesure (M) selon la revendication 2, en ce que le premier matériau élastique est un matériau ayant un premier module d'élasticité (E1) dans une plage comprise entre 0,001 et 10 GPa et/ou un comportement élastique non linéaire.

4. Dispositif de mesure (M) selon la revendication 2 ou 3, en ce que la couche est réalisée par recouvrement du module électronique (5).

5. Dispositif de mesure (M) selon l'une des revendications 2 à 4, en ce que le premier matériau élastique est réalisé en l'un des matériaux suivants : PP, TPU, PA, PPS, époxyde, LCP, TPI, PAI, PPS, PPSU, PEK, PEEK, phénol, PE, silicone, caoutchouc, mousse de polymère.

6. Dispositif de mesure (M) selon l'une des revendications précédentes, en ce que la zone de compensation (6) est un interstice entourant le module électronique (5).

7. Dispositif de mesure (M) selon l'une des revendications précédentes, en ce que le boîtier (8) est réalisé en un second matériau élastique.

8. Dispositif de mesure (M) selon la revendication 7, en ce que le second matériau élastique est un matériau ayant un comportement élastique essentiellement linéaire.

9. Dispositif de mesure (M) selon l'une des revendications 7 ou 8, en ce que le second matériau élastique est formé à partir de l'un des matériaux suivants : époxyde, PA, phénol, PE, PU, PP, TPU, LCP, TPI, PAI, PA, PPS, PPSU, PI, PEK, PEEK.

10. Dispositif de mesure (M) selon l'une des revendications 2 à 9, en ce que le premier module d'élasticité (E1) du premier matériau élastique est plus petit qu'un second module d'élasticité (E2) du second matériau élastique.

11. Dispositif de mesure (M) selon l'une des revendications précédentes, en ce que le convertisseur (1) comprend au moins un convertisseur piézoélectrique.

12. Dispositif de mesure (M) selon l'une des revendications 2 à 11, en ce que le premier matériau et/ou le second matériau est réalisé en un polymère de préférence renforcé de fibres.

13. Dispositif de mesure (M) selon l'une des revendications précédentes, en ce que le module électronique (5) est monté sur la plaque souple (7), de préférence en intercalant une carte imprimée (4) comportant des trous métallisés (4a), et est relié électriquement aux lignes de signaux (2).

14. Dispositif de mesure (M) selon l'une des revendications précédentes, en ce que le module électronique (5) comprend l'un ou plusieurs des composants suivants : composants passifs, prises mâles/prises femelles, contacts de serrage, contacts à souder, câbles, amplificateur opérationnel, transpondeur, mémoire de données, accumulateur d'énergie, filtre de fréquences, filtre passe-bande, convertisseur A/N, module radio, détecteur de crête, module RFID, antenne, blindage, capteur de température, MEMS.

15. Composant (9) dans lequel est intégré tout au moins partiellement un dispositif de mesure (M) selon l'une des revendications précédentes, en ce que le composant (9) est réalisé en un matériau composite renforcé de fibres.

16. Composant (9) selon la revendication 15, en ce que le dispositif de mesure (M) est intégré à l'extérieur d'une fibre neutre dans son ensemble ou seulement partiellement dans le composant (9).

17. Composant selon la revendication 15, en ce que le dispositif de mesure (M) est appliqué sur le composant (9).
